# EUROPEAN PATENT APPLICATION

(11) **EP 4 498 719 A1**
(43) Date of publication of application: **29.01.2025**
(21) Application number: 23773900.8
(22) Date of filing: 22.03.2023
(51) Int. Cl.: H04W 12/037

(54) **BEAM PROCESSING METHOD AND APPARATUS, AND DEVICE**

(30) Priority: 23.03.2022 CN 202210294652
(71) Applicant: VIVO MOBILE COMMUNICATION CO., LTD., Dongguan, Guangdong 523863 (CN)
(72) Inventor: SHI, Yuan, Dongguan, Guangdong 523863 (CN)
(74) Representative: Lavoix
(86) International application number: PCT/CN2023/083048
(87) International publication number: WO 2023/179653

(57) **Abstract**

This application discloses a beam processing method and apparatus, and a device, and pertains to the field of communications technologies. The method in the embodiments of this application includes: receiving, by a first device, first beam association information; where the first beam association information includes second beam association information and/or third beam association information, and the first beam association information is used as input information for an artificial intelligence model, the artificial intelligence model being used for a beam-related function; where the second beam association information is obtained after a second device performs transformation processing on fourth beam association information, the fourth beam association information being beam association information at a receiving end of a first reference signal; and the third beam association information is obtained after the second device performs transformation processing on fifth beam association information, the fifth beam association information being beam association information at a transmitting end of the first reference signal.

## Description

### CROSS-REFERENCE TO RELATED APPLICATIONS

This application claims priority to Chinese Patent Application No.202210294652.5, filed in China on March 23, 2022, which is incorporated herein by reference in its entirety.

### TECHNICAL FIELD

This application pertains to the field of communications technologies, and specifically relates to a beam processing method and apparatus, and a device.

### BACKGROUND

Artificial intelligence (Artificial Intelligence, AI) has been currently widely used in various fields, and therefore, solutions for using AI for beam prediction have also been proposed in the field of communications technology. To obtain good performance, the input of the AI model includes not only beam quality-related information but also more beam association information.

However, direct transmission of the beam association information between devices will expose the implementation of beamforming at the transmitting and receiving ends, affecting communication security.

### SUMMARY

Embodiments of this application provide a beam processing method and apparatus, and a device, which can solve the problem of exposing beamforming at the transmitting and receiving ends caused by the transmission of beam association information between devices.

According to a first aspect, a beam processing method is provided, and the method includes:
receiving, by a first device, first beam association information; where the first beam association information includes second beam association information and/or third beam association information, and the first beam association information is used as input information for an artificial intelligence model, the artificial intelligence model being used for a beam-related function; where
the second beam association information is obtained after a second device performs transformation processing on fourth beam association information, the fourth beam association information being beam association information at a receiving end of a first reference signal; and
the third beam association information is obtained after the second device performs transformation processing on fifth beam association information, the fifth beam association information being beam association information at a transmitting end of the first reference signal.

According to a second aspect, a beam processing apparatus is provided, including:
a first receiving module, configured to receive first beam association information; where the first beam association information includes second beam association information and/or third beam association information, and the first beam association information is used as input information for an artificial intelligence model, the artificial intelligence model being used for a beam-related function; where
the second beam association information is obtained after a second device performs transformation processing on fourth beam association information, the fourth beam association information being beam association information at a receiving end of a first reference signal; and
the third beam association information is obtained after the second device performs transformation processing on fifth beam association information, the fifth beam association information being beam association information at a transmitting end of the first reference signal.

According to a third aspect, a beam processing method is provided, and the method includes:
transmitting, by a second device, first beam association information; where the first beam association information includes second beam association information and/or third beam association information, and the first beam association information is used as input information for an artificial intelligence model, the artificial intelligence model being used for a beam-related function; where
the second beam association information is obtained after the second device performs transformation processing on fourth beam association information, the fourth beam association information being beam association information at a receiving end of a first reference signal; and
the third beam association information is obtained after the second device performs transformation processing on fifth beam association information, the fifth beam association information being beam association information at a transmitting end of the first reference signal.

According to a fourth aspect, a beam processing apparatus is provided, including:
a first transmitting module, configured to transmit first beam association information; where the first beam association information includes second beam association information and/or third beam association information, and the first beam association information is used as input information for an artificial intelligence model, the artificial intelligence model being used for a beam-related function; where
the second beam association information is obtained after the second device performs transformation processing on fourth beam association information, the fourth beam association information being beam association information at a receiving end of a first reference signal; and
the third beam association information is obtained after the second device performs transformation processing on fifth beam association information, the fifth beam association information being beam association information at a transmitting end of the first reference signal.

According to a fifth aspect, a terminal is provided, where the terminal includes a processor and a memory, and the memory stores a program or an instruction capable of running on the processor. When the program or the instruction is executed by the processor, the method according to the first aspect is implemented, or the steps of the method according to the third aspect are implemented.

According to a sixth aspect, a communication device is provided, including a processor and a communication interface, where the communication interface is configured to receive first beam association information; where the first beam association information includes second beam association information and/or third beam association information, and the first beam association information is used as input information for an artificial intelligence model, the artificial intelligence model being used for a beam-related function; where
the second beam association information is obtained after a second device performs transformation processing on fourth beam association information, the fourth beam association information being beam association information at a receiving end of a first reference signal; and
the third beam association information is obtained after the second device performs transformation processing on fifth beam association information, the fifth beam association information being beam association information at a transmitting end of the first reference signal.

According to a seventh aspect, a communication device is provided, including a processor and a communication interface, where the communication interface is configured to transmit first beam association information; where the first beam association information includes second beam association information and/or third beam association information, and the first beam association information is used as input information for an artificial intelligence model, the artificial intelligence model being used for a beam-related function; where
the second beam association information is obtained after the second device performs transformation processing on fourth beam association information, the fourth beam association information being beam association information at a receiving end of a first reference signal; and
the third beam association information is obtained after the second device performs transformation processing on fifth beam association information, the fifth beam association information being beam association information at a transmitting end of the first reference signal.

According to an eighth aspect, a beam processing system is provided, including a first device and a second device, where the first device may be configured to execute the steps of the beam processing method according to the first aspect, and the second device may be configured to execute the steps of the beam processing method according to the third aspect.

According to a ninth aspect, a readable storage medium is provided, where a program or an instruction is stored in the readable storage medium, and when the program or the instruction is executed by a processor, the steps of the method according to the first aspect are implemented, or the steps of the method according to the third aspect are implemented.

According to a tenth aspect, a chip is provided, where the chip includes a processor and a communication interface, the communication interface is coupled to the processor, and the processor is configured to run a program or instruction to implement the method according to the first aspect or the method according to the third aspect.

According to an eleventh aspect, a computer program/program product is provided, where the computer program/program product is stored in a storage medium, and the computer program/program product is executed by at least one processor to implement the method according to the first aspect or the steps of the method according to the third aspect.

In the embodiments of this application, the first beam association information received by the first device includes second beam association information and/or third beam association information. Since the second beam association information and the third beam association information are both obtained after the second device performs transformation processing on the original information, the process of receiving the first beam association information by the first device will not directly expose the original information, ensuring communication security.

### BRIEF DESCRIPTION OF DRAWINGS

FIG. 1 is a block diagram of a wireless communication system;
FIG. 2 is a first schematic flowchart of a beam processing method according to an embodiment of this application;
FIG. 3 is a second schematic flowchart of a beam processing method according to an embodiment of this application;
FIG. 4 is a first schematic diagram of a modular structure of a beam processing apparatus according to an embodiment of this application;
FIG. 5 is a second schematic diagram of a modular structure of a beam processing apparatus according to an embodiment of this application;
FIG. 6 is a schematic structural diagram of a communication device according to an embodiment of this application;
FIG. 7 is a schematic structural diagram of a terminal according to an embodiment of this application; and
FIG. 8 is a schematic structural diagram of a network-side device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited, for example, there may be one or more first objects. In addition, "and/or" in the specification and claims represents at least one of connected objects, and the character "/" generally indicates that the associated objects have an "or" relationship.

It should be noted that technologies described in the embodiments of this application are not limited to long term evolution (Long Term Evolution, LTE) or LTE-Advanced (LTE-Advanced, LTE-A) systems, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for illustrative purposes, and NR terms are used in most of the following descriptions, although these technologies may also be applied to other applications than the NR system application, for example, to the 6^{th} generation (6^{th} Generation, 6G) communication system.

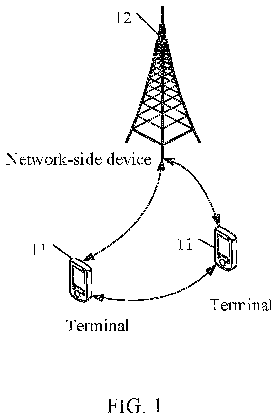

FIG. 1 is a block diagram of a wireless communication system to which the embodiments of this application may be applicable. The wireless communication system includes a terminal 11 and a network-side device 12. The terminal 11 may be a mobile phone, tablet personal computer (Tablet Personal Computer), laptop computer (Laptop Computer) or notebook computer, personal digital assistant (Personal Digital Assistant, PDA), palmtop computer, netbook, ultra-mobile personal computer (ultra-mobile personal computer, UMPC), mobile internet device (Mobile Internet Device, MID), augmented reality (augmented reality, AR)/virtual reality (virtual reality, VR) device, robot, wearable device (Wearable Device, WD), vehicle user equipment (Vehicle User Equipment, VUE), pedestrian user equipment (Pedestrian User Equipment, PUE), smart home device (wireless communication-enabled home devices such as refrigerators, televisions, washing machines, or furniture), gaming console, personal computer (Personal Computer, PC), automated teller machine or self-service machine, or other terminal-side devices. Wearable devices include smartwatches, smart bands, smart earphones, smart glasses, smart jewelry (smart bangles, smart bracelets, smart rings, smart necklaces, smart foot bangles, and smart anklets), smart wristbands, and smart clothing. It should be noted that the specific type of the terminal 11 is not limited in the embodiments of this application. The network-side device 12 may include an access network device or core network device, where the access network device can also be referred to as a radio access network device, radio access network (Radio Access Network, RAN), radio access network function, or radio access network unit. The access network device may include base stations, wireless local area network (Wireless Local Area Network, WLAN) access points, WiFi nodes, or the like. The base station may be referred to as Node B, evolved Node B (eNB), access point, base transceiver station (Base Transceiver Station, BTS), radio base station, radio transceiver, basic service set (Basic Service Set, BSS), extended service set (Extended Service Set, ESS), home Node B, home evolved Node B, transmitting receiving point (Transmitting Receiving Point, TRP), or other appropriate terms in the field. As long as the same technical effect is achieved, the base station is not limited to any specific technical terminology. It should be noted that in the embodiments of this application, only the base station in the NR system is introduced as an example, and the specific type of the base station is not limited.

It should be known that in the embodiments of this application, a beam includes one or any combination of a transmit beam, a receive beam, and a beam pair. Therefore, a beam set in the embodiments of this application may be any one of a transmit beam set, a receive beam set, and a beam pair set, or any combination thereof.

In addition, in the embodiments of this application, the input information of the AI model includes at least one of the following:
expected information;
beam quality-related information;
first beam association information; and
time-related information.

Optionally, the expected information includes at least one of the following:
second beam association information; and
prediction time-related information.

The beam quality-related information refers to information that can characterize the quality of the beam, including but not limited to at least one of the following: layer 1 signal to interference and noise ratio (Layer 1 Signal to Interference and Noise Ratio, L1-SINR), layer 1 reference signal received power (Layer 1 reference signal received power, L1-RSRP), layer 1 reference signal received quality (Layer 1 Reference Signal Received Quality, L1-RSRQ), layer 3 signal to interference and noise ratio (Layer 3 Signal to Interference and Noise Ratio, L3-SINR), layer 3 reference signal received power (Layer 3 reference signal received power, L3-RSRP), layer 3 reference signal received quality (Layer 3 Reference Signal Received Quality, L3-RSRQ), and the like.

The first beam association information may include at least one of transmit beam association information, receive beam association information, and beam pair association information. Similarly, the second beam association information may include at least one of transmit beam association information, receive beam association information, and beam pair association information.

For example, a first device receives a first reference signal transmitted by a second device, and the first beam association information includes at least one of second device transmit beam association information, first device receive beam association information, and second device transmit beam and first device receive beam beam pair association information. The second beam association information includes at least one of the second device transmit beam association information expected by the first device, the first device receive beam association information expected by the first device, and the second device transmit beam and first device receive beam beam pair association information expected by the first device.

It should be noted that in this embodiment, the beam association information is used to represent the association information corresponding to the beam. Optionally, the beam association information includes at least one of the following: beam identifier-related information, beam angle-related information, and beam gain-related information.

The beam identifier-related information, also known as beam identity-related information, is used to represent identity recognition-related information of the beam, including but not limited to at least one of the following: transmit beam identifier (user identifier, ID), receive beam ID, beam pair ID, reference signal set ID corresponding to the beam, reference signal resource ID corresponding to the beam, unique identifier random ID, additional AI model (or AI network) processed code value, beam angle-related information, and the like.

The beam angle-related information is used to represent angle-related information corresponding to the beam, including but not limited to at least one of the following: beam pair angle-related information, transmitting angle-related information, and receiving angle-related information. Herein, the angle-related information is used to represent information related to an angle, for example, angle, radian, index code value, additional AI network processed code value, and the like.

The beam gain-related information is used to represent gain-related information of the beam and/or antenna, including but not limited to at least one of the following: antenna relative gain (unit: dBi), effective isotropic radiated power (Effective Isotropic Radiated Power, EIRP), beam angle gain, beam angle gain spectrum (that is, gains of a beam relative to different angles, including complete or partial gain spectrum information), EIRP corresponding to each beam angle, main lobe angle, side lobe angle, number of side lobes, side lobe distribution, number of antennas, beam scanning horizontal coverage, beam scanning vertical coverage, 3dB width, 6dB width, and the like.

Optionally, at least one of the angle-related information and the beam identity-related information may be described through two-dimensional components (horizontal-vertical components) or determined by describing through higherdimensional component information.

The following describes in detail the beam processing method, apparatus, and device provided in the embodiments of this application by using some embodiments and application scenarios thereof with reference to the accompanying drawings.

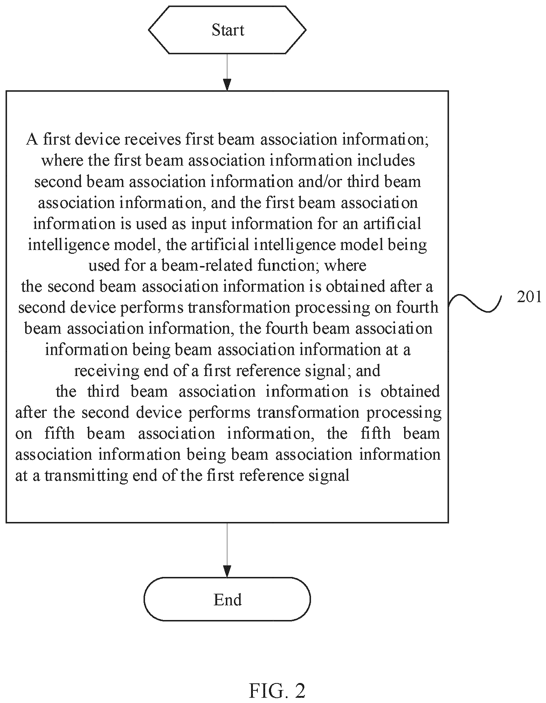

As shown in FIG. 2, a beam processing method according to an embodiment of this application includes the following steps:

Step 201: A first device receives first beam association information; where the first beam association information includes second beam association information and/or third beam association information, and the first beam association information is used as input information for an artificial intelligence model, the artificial intelligence model being used for a beam-related function; where
the second beam association information is obtained after a second device performs transformation processing on fourth beam association information, the fourth beam association information being beam association information at a receiving end of a first reference signal; and
the third beam association information is obtained after the second device performs transformation processing on fifth beam association information, the fifth beam association information being beam association information at a transmitting end of the first reference signal.

The beam-related function includes beam prediction, beam indication, beam recovery, beam training, and the like.

According to the previous Step 201, the first beam association information received by the first device includes second beam association information and/or third beam association information. Since the second beam association information and the third beam association information are both obtained after the second device performs transformation processing on the original information, the process of receiving the first beam association information by the first device will not directly expose the original information, ensuring communication security.

Optionally, before the receiving, by the first device, the first beam association information, the method further includes:
transmitting, by the first device, the fourth beam association information to the second device.

That is, the first device transmits the fourth beam association information to the second device so that the second device performs transformation processing on the fourth beam association information. Herein, although the fourth beam association information is exposed, the fifth beam association information is the beam association information of the second device or the beam association information of a third device received by the second device. This can still avoid the exposure of the fifth beam association information between the first device and the second device, ensuring a certain level of communication security.

If transmission of the first reference signal is performed between the second device and the first device, both the first device and the second device can be a terminal or a network-side device. For example, the second device (such as a base station) transmits the first reference signal to the first device (such as a terminal), the fourth beam association information is the beam association information obtained by the terminal monitoring the beam (transmit beam, receive beam, and beam pair) of the base station transmitting the first reference signal; and the fifth beam association information is the beam association information obtained by the base station monitoring the beam (transmit beam, receive beam, and beam pair) of the base station transmitting the first reference signal.

If the second device is an auxiliary network central unit and does not participate in the transmission and reception of the first reference signal, the second device, in addition to receiving the fourth beam association information transmitted by the first device, can also receive the fifth beam association information transmitted by the third device, and then perform transformation processing separately to obtain the second beam association information and the third beam association information, so that the second device can transmit the second beam association information and/or the third beam association information to the first device.

Of course, the second device can also transmit the second beam association information and/or the third beam association information to the third device. Herein, the transmission of the first reference signal is performed between the third device and the first device.

Optionally, in this embodiment, the fourth beam association information includes at least one of the following:
transmit beam association information;
receive beam association information; and
expected beam association information.

If the first device is the receiving end of the first reference signal and the second device is the transmitting end of the first reference signal, preferably, the fourth beam association information includes but is not limited to at least one of the following: the first device receive beam association information; the first device receive beam association information expected by the first device; and the first device receive beam and the second device transmit beam beam pair association information expected by the first device.

In addition, the second beam association information is obtained after transformation processing of the fourth beam association information, and the second beam association information also includes at least one of the following: transmit beam association information; receive beam association information; and expected beam association information. The specific implementation is the same as the implementation of the fourth beam association information. Details are not described herein again.

Optionally, in this embodiment, the fifth beam association information includes at least one of the following:
transmit beam association information;
receive beam association information; and
expected beam association information.

If the first device is the receiving end of the first reference signal and the second device is the transmitting end of the first reference signal, preferably, the fifth beam association information includes but is not limited to at least one of the following: the second device transmit beam association information; the second device transmit beam association information expected by the first device; and the first device receive beam and the second device transmit beam beam pair association information expected by the first device.

In addition, the third beam association information is obtained after transformation processing of the fifth beam association information, and the third beam association information also includes at least one of the following: transmit beam association information; receive beam association information; and expected beam association information. The specific implementation is as described above. Details are not described herein again.

Optionally, in this embodiment, the transformation processing includes at least one of the following:
preset model transformation;
transformation based on a random number; and
hash transformation.

Herein, the preset model is a configured transformation processing model, and the transformation processing model can also be an AI model. Using the preset model for transformation involves inputting the fourth beam association information into the preset model to obtain the output second beam association information; and inputting the fifth beam association information into the preset model to obtain the output third beam association information.

The transformation based on a random number may be randomly assigning a corresponding value to the information. Taking beam association information as beam angle as an example, the transformation based on a random number involves randomly assigning a value to the beam angle. For example, if the beam angle is 60 degrees, the randomly assigned value is 3, and this value of 3 is the result of transformation processing of the beam angle of 60 degrees.

Optionally, the transformation processing method used by the second device is related to the input information processing of the AI model training and inference.

That is, in the process of AI model training and inference, the transformation processing method for its input information is determined. In this way, the second device will use the determined transformation processing method to transform the original information so as not to affect the subsequent input to the AI model.

Optionally, considering that the second beam association information and the third beam association information, as input information for the AI model, are often of the same attribute. Therefore, in this embodiment, the second beam association information and the third beam association information use the same transformation processing.

That is, if the second beam association information is obtained through hash transformation of the fourth beam association information, the third beam association information also needs to be obtained through hash transformation of the fifth beam association information.

Optionally, in a case that transformation processing needs to be performed on the fourth beam association information and the fourth beam association information includes multiple pieces of beam association information, at least one piece of beam association information among the multiple pieces of beam association information is an object of the transformation processing.

Optionally, in a case that transformation processing needs to be performed on the fifth beam association information and the fifth beam association information includes multiple pieces of beam association information, at least one piece of beam association information among the multiple pieces of beam association information is an object of the transformation processing.

Optionally, a type of the fourth beam association information is different from a type of the fifth beam association information. For example, the fourth beam association information includes beam angle-related information, and the fifth beam association information includes beam identity-related information.

Optionally, in this embodiment, the number of the pieces of the fourth beam association information and the number of pieces of the fifth beam association information are greater than or equal to the number of the pieces of input information of the artificial intelligence model.

In this way, since the transformation processing does not change the number of the pieces of information, the number of the pieces of the second beam association information and the number of the pieces of the third beam association information are greater than or equal to the number of the pieces of the input information of the AI model. The first device can select a same number of pieces of information from the second beam association information and the third beam association information according to the number of pieces of beam association information required to be input to the AI model, and input the selected information to the AI model.

Optionally, in this embodiment, the transmitting, by the first device, the fourth beam association information includes:
transmitting, by the first device, capability information including the fourth beam association information.

That is, the first device reports capability information to transmit the fourth beam association information.

Optionally, in this embodiment, the fourth beam association information and the fifth beam association information are represented by quantized encoded information; where the quantized encoded information is obtained based on a quantization interval.

Herein, the quantization interval can be determined through interaction. For example, if the beam association information is the beam angle and the quantization interval is configured as 10 degrees, quantization will be performed every 10 degrees.

Optionally, in this embodiment, in a case that the fourth beam association information and the fifth beam association information are not associated with a synchronization signal block (Synchronization Signal Block, SSB), quasi co-location information of SSBs with a same identifier and a same frequency domain position remains unchanged.

That is, for the first device, in a case that the fourth beam association information is not associated with the SSB, quasi co-location information of SSBs with a same identifier and a same frequency domain position remains unchanged. That is, for the second device, in a case that the fifth beam association information is not associated with the SSB, quasi co-location information of SSBs with a same identifier and a same frequency domain position remains unchanged.

Optionally, in this embodiment, the fourth beam association information and the fifth beam association information are determined based on configuration information corresponding to the first reference signal; or
the fourth beam association information and the fifth beam association information are determined based on configuration information of a second reference signal quasi co-located with the first reference signal.

The first reference signal may be a reference signal corresponding to the beam of any of the above beam sets, or a reference signal corresponding to the beam quality information input to the AI model.

The example that the fourth beam association information is determined based on the configuration information corresponding to the first reference signal means that the fourth beam association information can be directly obtained.

For example, the first reference signal is a channel state information reference signal (Channel State Information Reference Signal, CSI-RS), and the configuration information of one CSI-RS includes one SSB index (index) associated with the CSI-RS. When the beam association information is the SSB index, for one CSI-RS, the beam association information can be directly determined based on the CSI-RS interaction configuration information (one associated SSB index).

For another example, the first reference signal is an SSB, and the configuration information of one SSB includes one SSB index associated with the SSB. When the beam association information is the SSB index, for one SSB, the beam association information can be directly determined based on the SSB interaction configuration information (one associated SSB index) or the index using the SSB.

Similarly, the fifth beam association information is determined based on the configuration information corresponding to the first reference signal. This is the same as the fourth beam association information. Details are not described herein again.

The fourth beam association information is determined based on the configuration information of the second reference signal quasi co-located with the first reference signal, that is, the fourth beam association information can be indirectly obtained in an implicit manner. The fifth beam association information is determined based on the configuration information of the second reference signal quasi co-located with the first reference signal, that is, the fifth beam association information can be indirectly obtained in an implicit manner.

Optionally, the second reference signal includes at least one of the following signals on a quasi co-location chain of the first reference signal:
a reference signal that is the first configured with beam association information;
a reference signal that is the last configured with beam association information;
an SSB; and
an SSB configured with beam association information.

That is, the second reference signal may be the reference signal that is the first configured with beam association information on the quasi co-location chain of the first reference signal; it may be the reference signal that is the last configured with beam association information on the quasi co-location chain of the first reference signal; it may be an SSB on the quasi co-location chain of the first reference signal; or it may be an SSB configured with beam association information on the quasi co-location chain of the first reference signal.

Specifically, through the upper-level reference signal corresponding to the quasi co-location chain (Quasi co-location chain, QCL chain), or by continuously searching through the QCL chain for the upper-level reference signal until a specific characteristic is found, this specific characteristic can be used as the beam association information. Herein, the QCL chain may also be replaced with QCL type D.

For example, in a case that the beam association information is the SSB index, for a first reference signal (such as CSI-RS), when the SSB index associated with the CSI-RS is found according to the QCL relationship configured for the CSI-RS, the found SSB index is the beam association information.

For example, in a case that the beam association information is a beam angle, for a CSI-RS, when the SSB index associated with the CSI-RS is found according to the QCL relationship configured for the CSI-RS, the beam angle associated with the SSB index is the beam association information for that CSI-RS.

In summary, the first beam association information received by the first device includes second beam association information and/or third beam association information. Since the second beam association information and the third beam association information are both obtained after the second device performs transformation processing on the original information, the process of receiving the first beam association information by the first device will not directly expose the original information, ensuring communication security.

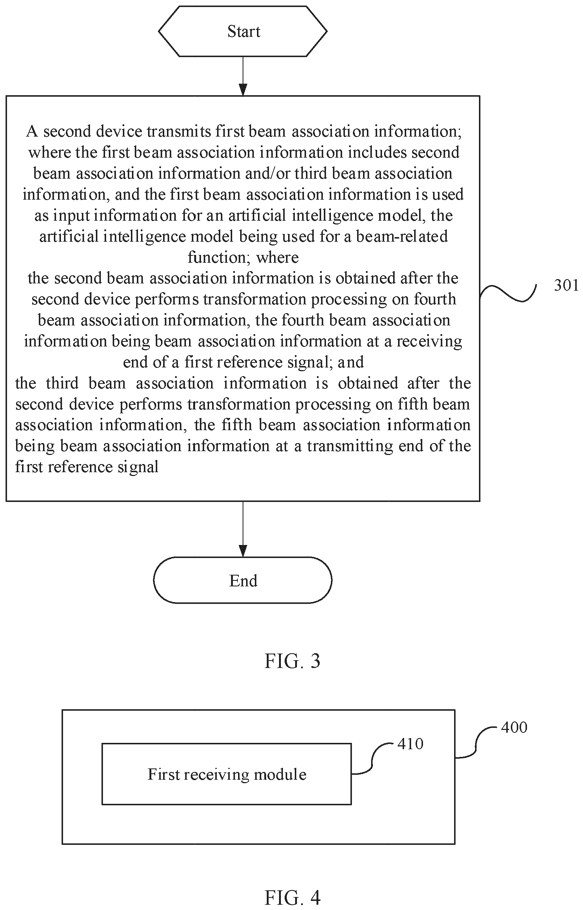

As shown in FIG. 3, a beam processing method according to an embodiment of this application includes the following steps:

Step 301: A second device transmits first beam association information; where the first beam association information includes second beam association information and/or third beam association information, and the first beam association information is used as input information for an artificial intelligence model, the artificial intelligence model being used for a beam-related function; where
the second beam association information is obtained after the second device performs transformation processing on fourth beam association information, the fourth beam association information being beam association information at a receiving end of a first reference signal; and
the third beam association information is obtained after the second device performs transformation processing on fifth beam association information, the fifth beam association information being beam association information at a transmitting end of the first reference signal.

In this way, corresponding to the method executed by the first device in the above embodiment, the second device transmits the first beam association information, including the second beam association information and/or the third beam association information. Since the second beam association information and the third beam association information are both obtained after the second device performs transformation processing on the original information, the process of transmitting the first beam association information will not directly expose the original information, ensuring communication security.

Optionally, before the transmitting, by the second device, the second beam association information, the method further includes:
receiving, by the second device, the fourth beam association information.

That is, the first device transmits the fourth beam association information to the second device so that the second device performs transformation processing on the fourth beam association information. Herein, although the fourth beam association information is exposed, this can still avoid the exposure of the fifth beam association information, ensuring a certain level of communication security.

Optionally, before the transmitting, by the second device, the third beam association information, the method further includes:
receiving, by the second device, the fifth beam association information.

Herein, for a case where the second device does not participate in the transmission and reception of the first reference signal, for example, the second device being an auxiliary network central unit, the second device, in addition to receiving the fourth beam association information transmitted by the first device, can also receive the fifth beam association information transmitted by the third device, and then perform transformation processing separately to obtain the second beam association information and the third beam association information, so that the second device can transmit the second beam association information and/or the third beam association information to the first device.

Of course, the second device can also transmit the second beam association information and/or the third beam association information to the third device. Herein, the transmission of the first reference signal is performed between the third device and the first device.

Optionally, the fourth beam association information includes at least one of the following:
transmit beam association information;
receive beam association information; and
expected beam association information.

Optionally, the fifth beam association information includes at least one of the following:
transmit beam association information;
receive beam association information; and
expected beam association information.

Optionally, the transformation processing includes at least one of the following:
preset model transformation;
transformation based on a random number; and
hash transformation.

Optionally, the second beam association information and the third beam association information adopt same transformation processing.

Optionally, in a case that transformation processing needs to be performed on the fourth beam association information and the fourth beam association information includes multiple pieces of beam association information, at least one piece of beam association information among the multiple pieces of beam association information is an object of the transformation processing.

Optionally, in a case that transformation processing needs to be performed on the fifth beam association information and the fifth beam association information includes multiple pieces of beam association information, at least one piece of beam association information among the multiple pieces of beam association information is an object of the transformation processing.

Optionally, a type of the fourth beam association information is different from a type of the fifth beam association information.

Optionally, the number of the pieces of the fourth beam association information and the number of the pieces of the fifth beam association information are greater than or equal to the number of the pieces of input information of the artificial intelligence model.

Optionally, the transmitting, by the first device, the fourth beam association information includes:
transmitting, by the first device, capability information including the fourth beam association information.

Optionally, the fourth beam association information and the fifth beam association information are represented by quantized encoded information; where the quantized encoded information is obtained based on a quantization interval.

Optionally, in a case that the fourth beam association information and the fifth beam association information are not associated with a synchronization signal block SSB, quasi co-location information of SSBs with a same identifier and a same frequency domain position remains unchanged.

Optionally, the fourth beam association information and the fifth beam association information are determined based on configuration information corresponding to the first reference signal; or
the fourth beam association information and the fifth beam association information are determined based on configuration information of a second reference signal quasi co-located with the first reference signal.

Optionally, the second reference signal includes at least one of the following signals on a quasi co-location chain of the first reference signal:
a reference signal that is the first configured with beam association information;
a reference signal that is the last configured with beam association information;
an SSB; and
an SSB configured with beam association information.

It should be noted that the method is implemented in cooperation with the method executed by the first device described above, and implementations in the embodiment of the method executed by the first device described above are also applicable to this method, with the same technical effects achieved.

The beam processing method provided in the embodiments of this application may be executed by a beam processing apparatus. In the embodiments of this application, the beam processing apparatus provided by the embodiments of this application is described by using the beam processing method being executed by the beam processing apparatus as an example.

As shown in FIG. 4, a beam processing apparatus 400 according to an embodiment of this application includes:
a first receiving module 410, configured to receive first beam association information; where the first beam association information includes second beam association information and/or third beam association information, and the first beam association information is used as input information for an artificial intelligence model, the artificial intelligence model being used for a beam-related function; where
the second beam association information is obtained after a second device performs transformation processing on fourth beam association information, the fourth beam association information being beam association information at a receiving end of a first reference signal; and
the third beam association information is obtained after the second device performs transformation processing on fifth beam association information, the fifth beam association information being beam association information at a transmitting end of the first reference signal.

Optionally, the apparatus further includes:
a second transmitting module, configured to transmit the fourth beam association information to the second device.

Optionally, the fourth beam association information includes at least one of the following:
transmit beam association information;
receive beam association information; and
expected beam association information.

Optionally, the fifth beam association information includes at least one of the following:
transmit beam association information;
receive beam association information; and
expected beam association information.

Optionally, the transformation processing includes at least one of the following:
preset model transformation;
transformation based on a random number; and
hash transformation.

Optionally, the second beam association information and the third beam association information adopt same transformation processing.

Optionally, in a case that transformation processing needs to be performed on the fourth beam association information and the fourth beam association information includes multiple pieces of beam association information, at least one piece of beam association information among the multiple pieces of beam association information is an object of the transformation processing.

Optionally, in a case that transformation processing needs to be performed on the fifth beam association information and the fifth beam association information includes multiple pieces of beam association information, at least one piece of beam association information among the multiple pieces of beam association information is an object of the transformation processing.

Optionally, a type of the fourth beam association information is different from a type of the fifth beam association information.

Optionally, the number of the pieces of the fourth beam association information and the number of the pieces of the fifth beam association information are greater than or equal to the number of the pieces of input information of the artificial intelligence model.

Optionally, the second transmitting module is further configured to:
transmit capability information including the fourth beam association information.

Optionally, the fourth beam association information and the fifth beam association information are represented by quantized encoded information; where the quantized encoded information is obtained based on a quantization interval.

Optionally, in a case that the fourth beam association information and the fifth beam association information are not associated with a synchronization signal block SSB, quasi co-location information of SSBs with a same identifier and a same frequency domain position remains unchanged.

Optionally, the fourth beam association information and the fifth beam association information are determined based on configuration information corresponding to the first reference signal; or
the fourth beam association information and the fifth beam association information are determined based on configuration information of a second reference signal quasi co-located with the first reference signal.

Optionally, the second reference signal includes at least one of the following signals on a quasi co-location chain of the first reference signal:
a reference signal that is the first configured with beam association information;
a reference signal that is the last configured with beam association information;
an SSB; and
an SSB configured with beam association information.

The first beam association information received by the beam processing apparatus includes the second beam association information and/or the third beam association information. Since the second beam association information and the third beam association information are both obtained after the second device performs transformation processing on the original information, the process of receiving the first beam association information will not directly expose the original information, ensuring communication security.

The beam processing apparatus in the embodiments of this application may be an electronic device such as an electronic device with an operating system, or a component in an electronic device such as an integrated circuit or chip. The electronic device may be a terminal or other devices than terminals. For example, the terminal may include but is not limited to the types of the terminal 11 listed above, and the other devices may be servers, network attached storage (Network Attached Storage, NAS), or the like, which are not specifically limited in the embodiments of this application.

The beam processing apparatus provided in this embodiment of this application is capable of implementing the processes implemented in the method embodiments in FIG. 2, with the same technical effects achieved. To avoid repetition, details are not described herein again.

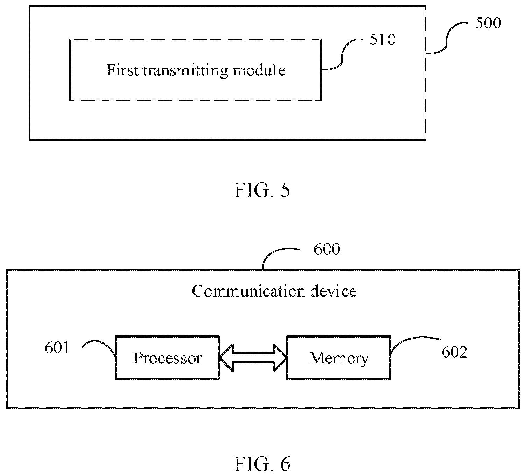

As shown in FIG. 5, a beam processing apparatus 500 according to an embodiment of this application includes:
a first transmitting module 510, configured to transmit first beam association information; where the first beam association information includes second beam association information and/or third beam association information, and the first beam association information is used as input information for an artificial intelligence model, the artificial intelligence model being used for a beam-related function; where
the second beam association information is obtained after the second device performs transformation processing on fourth beam association information, the fourth beam association information being beam association information at a receiving end of a first reference signal; and
the third beam association information is obtained after the second device performs transformation processing on fifth beam association information, the fifth beam association information being beam association information at a transmitting end of the first reference signal.

Optionally, the apparatus further includes:
a second receiving module, configured to receive the fourth beam association information.

Optionally, the apparatus further includes:
a third receiving module, configured to receive the fifth beam association information.

Optionally, the fourth beam association information includes at least one of the following:
transmit beam association information;
receive beam association information; and
expected beam association information.

Optionally, the fifth beam association information includes at least one of the following:
transmit beam association information;
receive beam association information; and
expected beam association information.

Optionally, the transformation processing includes at least one of the following:
preset model transformation;
transformation based on a random number; and
hash transformation.

Optionally, the second beam association information and the third beam association information adopt same transformation processing.

Optionally, in a case that transformation processing needs to be performed on the fourth beam association information and the fourth beam association information includes multiple pieces of beam association information, at least one piece of beam association information among the multiple pieces of beam association information is an object of the transformation processing.

Optionally, in a case that transformation processing needs to be performed on the fifth beam association information and the fifth beam association information includes multiple pieces of beam association information, at least one piece of beam association information among the multiple pieces of beam association information is an object of the transformation processing.

Optionally, a type of the fourth beam association information is different from a type of the fifth beam association information.

Optionally, the number of the pieces of the fourth beam association information and the number of the pieces of the fifth beam association information are greater than or equal to the number of the pieces of input information of the artificial intelligence model.

Optionally, the transmitting, by the first device, the fourth beam association information includes:
transmitting, by the first device, capability information including the fourth beam association information.

Optionally, the fourth beam association information and the fifth beam association information are represented by quantized encoded information; where the quantized encoded information is obtained based on a quantization interval.

Optionally, in a case that the fourth beam association information and the fifth beam association information are not associated with a synchronization signal block SSB, quasi co-location information of SSBs with a same identifier and a same frequency domain position remains unchanged.

Optionally, the fourth beam association information and the fifth beam association information are determined based on configuration information corresponding to the first reference signal; or
the fourth beam association information and the fifth beam association information are determined based on configuration information of a second reference signal quasi co-located with the first reference signal.

Optionally, the second reference signal includes at least one of the following signals on a quasi co-location chain of the first reference signal:
a reference signal that is the first configured with beam association information;
a reference signal that is the last configured with beam association information;
an SSB; and
an SSB configured with beam association information.

The apparatus transmits the first beam association information, including the second beam association information and/or the third beam association information. Since the second beam association information and the third beam association information are both obtained after the second device performs transformation processing on the original information, the process of receiving the first beam association information will not directly expose the original information, ensuring communication security.

The beam processing apparatus in the embodiments of this application may be an electronic device such as an electronic device with an operating system, or a component in an electronic device such as an integrated circuit or chip. The electronic device may be a terminal or other devices than terminals. For example, the terminal may include but is not limited to the types of the terminal 11 listed above, and the other devices may be servers, network attached storage (Network Attached Storage, NAS), or the like, which are not specifically limited in the embodiments of this application.

The beam processing apparatus provided in this embodiment of this application is capable of implementing the processes implemented in the method embodiments in FIG. 3, with the same technical effects achieved. To avoid repetition, details are not described herein again.

Optionally, as shown in FIG. 6, an embodiment of this application further provides a communication device 600 including a processor 601 and a memory 602. The memory 602 stores a program or instruction executable on the processor 601. For example, when the communication device 600 is a terminal, when the program or instruction is executed by the processor 601, the steps of the foregoing embodiment of the beam processing method are implemented, with the same technical effects achieved. In a case that the communication device 600 is a network-side device, when the program or instruction is executed by the processor 601, the steps of the foregoing embodiment of the beam processing method are implemented, with the same technical effects achieved. To avoid repetition, details are not described herein again.

An embodiment of this application further provides a communication device, including a processor and a communication interface, where the communication interface is configured to receive first beam association information; where the first beam association information includes second beam association information and/or third beam association information, and the first beam association information is used as input information for an artificial intelligence model, the artificial intelligence model being used for a beam-related function; where
the second beam association information is obtained after a second device performs transformation processing on fourth beam association information, the fourth beam association information being beam association information at a receiving end of a first reference signal; and
the third beam association information is obtained after the second device performs transformation processing on fifth beam association information, the fifth beam association information being beam association information at a transmitting end of the first reference signal.

The communication interface is configured to transmit and receive data under the control of the processor.

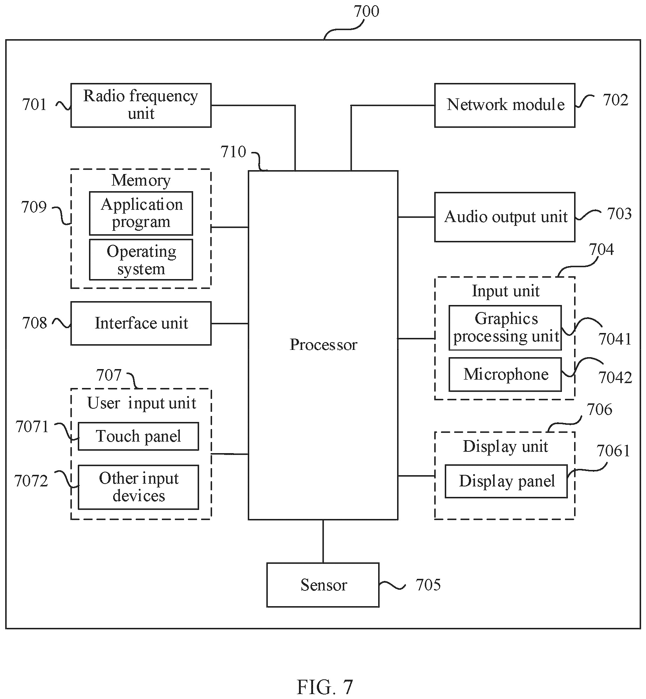

This communication device embodiment corresponds to the method embodiment performed by the foregoing first device. All processes and implementations in the foregoing method embodiment can be applicable to this communication device embodiment, with the same technical effect achieved. Specifically, FIG. 7 is a schematic diagram of a hardware structure of a terminal in a case that the communication device implementing the embodiments of this application is the terminal.

The terminal 700 includes but is not limited to at least part of these components: a radio frequency unit 701, a network module 702, an audio output unit 703, an input unit 704, a sensor 705, a display unit 706, a user input unit 707, an interface unit 708, a memory 709, a processor 710, and the like.

It can be understood by those skilled in the art that the terminal 700 may further include a power supply (for example, a battery) supplying power to the components. The power supply may be logically connected to the processor 710 via a power management system, so that functions such as charge management, discharge management, and power consumption management are implemented via the power management system. The structure of the terminal shown in FIG. 7 does not constitute any limitation on the terminal, and the terminal may include more or fewer components than shown in the figure, or combine some of the components, or have different arrangements of the components. Details are not described herein again.

It should be understood that in an embodiment of this application, the input unit 704 may include a graphics processing unit (Graphics Processing Unit, GPU) 7041 and a microphone 7042. The graphics processing unit 7041 processes image data of a static picture or video obtained by an image capture apparatus (such as a camera) in an image capture or video capture mode. The display unit 706 may include a display panel 7061. The display panel 7061 may be configured in a form of a liquid crystal display, an organic light-emitting diode display, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. Specifically, the other input devices 7072 may include but are not limited to a physical keyboard, a function button (for example, volume control button or on/off button), a trackball, a mouse, and a joystick. Details are not described herein again.

In an embodiment of this application, the radio frequency unit 701 receives downlink data from a network-side device and transfers the data to the processor 710 for processing; and the radio frequency unit 701 can additionally send uplink data to the network-side device. Generally, the radio frequency unit 701 includes but is not limited to an antenna, an amplifier, a transceiver, a coupler, a low noise amplifier, a duplexer, and the like.

The memory 709 may be configured to store a software program or instruction and various data. The memory 709 may include a first storage area for storing a program or instruction and a second storage area for storing data. The first storage area may store an operating system, an application program or instruction required by at least one function (for example, a sound playback function or an image playback function), and the like. Additionally, the memory 709 may be a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 709 in the embodiments of this application includes but is not limited to these or any other applicable types of memories.

The processor 710 may include one or more processing units. Optionally, the processor 710 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 710.

The radio frequency unit 701 is configured to receive first beam association information; where the first beam association information includes second beam association information and/or third beam association information, and the first beam association information is used as input information for an artificial intelligence model, the artificial intelligence model being used for a beam-related function; where
the second beam association information is obtained after a second device performs transformation processing on fourth beam association information, the fourth beam association information being beam association information at a receiving end of a first reference signal; and
the third beam association information is obtained after the second device performs transformation processing on fifth beam association information, the fifth beam association information being beam association information at a transmitting end of the first reference signal.

The first beam association information received by the terminal includes the second beam association information and/or the third beam association information. Since the second beam association information and the third beam association information are both obtained after the second device performs transformation processing on the original information, the process of receiving the first beam association information will not directly expose the original information, ensuring communication security.

Optionally, the radio frequency unit 701 is further configured to transmit the fourth beam association information to the second device.

Optionally, the fourth beam association information includes at least one of the following:
transmit beam association information;
receive beam association information; and
expected beam association information.

Optionally, the fifth beam association information includes at least one of the following:
transmit beam association information;
receive beam association information; and
expected beam association information.

Optionally, the transformation processing includes at least one of the following:
preset model transformation;
transformation based on a random number; and
hash transformation.

Optionally, the second beam association information and the third beam association information adopt same transformation processing.

Optionally, in a case that transformation processing needs to be performed on the fourth beam association information and the fourth beam association information includes multiple pieces of beam association information, at least one piece of beam association information among the multiple pieces of beam association information is an object of the transformation processing.

Optionally, in a case that transformation processing needs to be performed on the fifth beam association information and the fifth beam association information includes multiple pieces of beam association information, at least one piece of beam association information among the multiple pieces of beam association information is an object of the transformation processing.

Optionally, a type of the fourth beam association information is different from a type of the fifth beam association information.

Optionally, the number of the pieces of the fourth beam association information and the number of the pieces of the fifth beam association information are greater than or equal to the number of the pieces of input information of the artificial intelligence model.

Optionally, the radio frequency unit 701 is further configured to transmit capability information including the fourth beam association information.

Optionally, the fourth beam association information and the fifth beam association information are represented by quantized encoded information; where the quantized encoded information is obtained based on a quantization interval.

Optionally, in a case that the fourth beam association information and the fifth beam association information are not associated with a synchronization signal block SSB, quasi co-location information of SSBs with a same identifier and a same frequency domain position remains unchanged.

Optionally, the fourth beam association information and the fifth beam association information are determined based on configuration information corresponding to the first reference signal; or
the fourth beam association information and the fifth beam association information are determined based on configuration information of a second reference signal quasi co-located with the first reference signal.

Optionally, the second reference signal includes at least one of the following signals on a quasi co-location chain of the first reference signal:
a reference signal that is the first configured with beam association information;
a reference signal that is the last configured with beam association information;
an SSB; and
an SSB configured with beam association information.

An embodiment of this application further provides a communication device, including a processor and a communication interface, where the communication interface is configured to transmit first beam association information; where the first beam association information includes second beam association information and/or third beam association information, and the first beam association information is used as input information for an artificial intelligence model, the artificial intelligence model being used for a beam-related function; where
the second beam association information is obtained after the second device performs transformation processing on fourth beam association information, the fourth beam association information being beam association information at a receiving end of a first reference signal; and
the third beam association information is obtained after the second device performs transformation processing on fifth beam association information, the fifth beam association information being beam association information at a transmitting end of the first reference signal.

The communication interface is configured to transmit and receive data under the control of the processor.

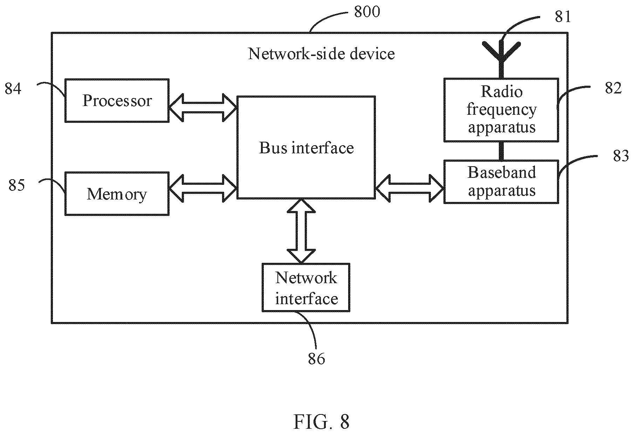

This communication embodiment corresponds to the method embodiment performed by the foregoing second device. All processes and implementations in the foregoing method embodiment can be applicable to this communication device embodiment, with the same technical effect achieved. Specifically, FIG. 8 is a schematic diagram of a hardware structure of a network-side device in a case that the communication device implementing the embodiments of this application is the network-side device.

The network-side device 800 includes an antenna 81, a radio frequency apparatus 82, a baseband apparatus 83, a processor 84, and memory 85. The antenna 81 is connected to the radio frequency apparatus 82. In an uplink direction, the radio frequency apparatus 82 receives information by using the antenna 81, and transmits the received information to the baseband apparatus 83 for processing. In a downlink direction, the baseband apparatus 83 processes to-be-sent information and transmits the information to the radio frequency apparatus 82; and the radio frequency apparatus 82 processes the received information and then transmits the information out by using the antenna 81.

The method executed by the network-side device in the aforesaid embodiments may be implemented on the baseband apparatus 83. The baseband apparatus 83 includes a baseband processor.

The baseband apparatus 83 may include, for example, at least one baseband processing unit, where a plurality of chips are disposed on the baseband processing unit. As shown in FIG. 8, one of the chips is, for example, a baseband processor, and connected to the memory 85 through a bus interface, to invoke the program in the memory 85 to perform the operations of the network device shown in the foregoing method embodiment.

The network-side device further includes a network interface 86, where the interface is, for example, a common public radio interface (Common Public Radio Interface, CPRI).

Specifically, the network-side device 800 in this embodiment of the present invention further includes: an instruction or program stored in the memory 85 and executable on the processor 84. The processor 84 invokes the instruction or program in the memory 85 to execute the method executed by the modules shown in FIG. 5, with the same technical effects achieved. To avoid repetition, details are not described herein again.

An embodiment of this application further provides a readable storage medium. The readable storage medium stores a program or an instruction, and when the program or instruction is executed by a processor, the foregoing beam processing method executed by the first device, or the processes of the foregoing embodiments of the beam processing method executed by the second device, are implemented, with the same technical effects achieved. To avoid repetition, details are not described herein again.

The processor is the processor in the communication device in the foregoing embodiment. The readable storage medium includes a computer-readable storage medium such as a computer read-only memory ROM, a random access memory RAM, a magnetic disk, or an optical disc.

An embodiment of this application further provides a chip, where the chip includes a processor and a communication interface. The communication interface is coupled to the processor, and the processor is configured to run a program or an instruction to implement the foregoing beam processing method executed by the first device, or the processes of the foregoing embodiments of the beam processing method executed by the second device, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and the computer program/program product is executed by at least one processor to implement the foregoing beam processing method executed by the first device, or the processes of the foregoing embodiments of the beam processing method executed by the second device, with the same technical effects achieved. To avoid repetition, details are not described herein again.

The embodiments of this application further provide a beam processing system, including: a first device and a second device, where the first device is configured to perform the steps of the beam processing method executed by the first device described above, and the second device is configured to perform the steps of the beam processing method executed by the second device described above.

It should be noted that in this specification, the terms "include" and "include", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially or the part contributing to related technologies may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. Abeam processing method, comprising:
receiving, by a first device, first beam association information; wherein the first beam association information comprises second beam association information and/or third beam association information, and the first beam association information is used as input information for an artificial intelligence model, the artificial intelligence model being used for a beam-related function; wherein
the second beam association information is obtained after a second device performs transformation processing on fourth beam association information, the fourth beam association information being beam association information at a receiving end of a first reference signal; and
the third beam association information is obtained after the second device performs transformation processing on fifth beam association information, the fifth beam association information being beam association information at a transmitting end of the first reference signal.

2. The method according to claim 1, wherein before the receiving, by the first device, the first beam association information, the method further comprises:
transmitting, by the first device, the fourth beam association information to the second device.

3. The method according to claim 1, wherein the fourth beam association information comprises at least one of the following:
transmit beam association information;
receive beam association information; and
expected beam association information.

4. The method according to claim 1, wherein the fifth beam association information comprises at least one of the following:
transmit beam association information;
receive beam association information; and
expected beam association information.

5. The method according to claim 1, wherein the transformation processing comprises at least one of the following:
preset model transformation;
transformation based on a random number; and
hash transformation.

6. The method according to claim 1 or 4, wherein the second beam association information and the third beam association information adopt same transformation processing.

7. The method according to claim 1, wherein in a case that transformation processing needs to be performed on the fourth beam association information and the fourth beam association information comprises multiple pieces of beam association information, at least one piece of beam association information among the multiple pieces of beam association information is an object of the transformation processing.

8. The method according to claim 1, wherein in a case that transformation processing needs to be performed on the fifth beam association information and the fifth beam association information comprises multiple pieces of beam association information, at least one piece of beam association information among the multiple pieces of beam association information is an object of the transformation processing.

9. The method according to claim 1, wherein a type of the fourth beam association information is different from a type of the fifth beam association information.

10. The method according to claim 1, wherein the number of pieces of the fourth beam association information and the number of pieces of the fifth beam association information are greater than or equal to the number of pieces of input information of the artificial intelligence model.

11. The method according to claim 2, wherein the transmitting, by the first device, the fourth beam association information comprises:
transmitting, by the first device, capability information comprising the fourth beam association information.

12. The method according to claim 1, wherein the fourth beam association information and the fifth beam association information are represented by quantized encoded information; wherein the quantized encoded information is obtained based on a quantization interval.

13. The method according to claim 1, wherein in a case that the fourth beam association information and the fifth beam association information are not associated with a synchronization signal block SSB, quasi co-location information of SSBs with a same identifier and a same frequency domain position remains unchanged.

14. The method according to claim 1, wherein the fourth beam association information and the fifth beam association information are determined based on configuration information corresponding to the first reference signal; or
the fourth beam association information and the fifth beam association information are determined based on configuration information of a second reference signal quasi co-located with the first reference signal.

15. The method according to claim 14, wherein the second reference signal comprises at least one of the following signals on a quasi co-location chain of the first reference signal:
a reference signal that is the first configured with beam association information;
a reference signal that is the last configured with beam association information;
an SSB; and
an SSB configured with beam association information.

16. Abeam processing method, comprising:
transmitting, by a second device, first beam association information; wherein the first beam association information comprises second beam association information and/or third beam association information, and the first beam association information is used as input information for an artificial intelligence model, the artificial intelligence model being used for a beam-related function; wherein
the second beam association information is obtained after the second device performs transformation processing on fourth beam association information, the fourth beam association information being beam association information at a receiving end of a first reference signal; and
the third beam association information is obtained after the second device performs transformation processing on fifth beam association information, the fifth beam association information being beam association information at a transmitting end of the first reference signal.

17. The method according to claim 16, wherein before the transmitting, by the second device, the second beam association information, the method further comprises:
receiving, by the second device, the fourth beam association information.

18. The method according to claim 16, wherein before the transmitting, by the second device, the third beam association information, the method further comprises:
receiving, by the second device, the fifth beam association information.

19. Abeam processing apparatus, comprising:
a first receiving module, configured to receive first beam association information; wherein the first beam association information comprises second beam association information and/or third beam association information, and the first beam association information is used as input information for an artificial intelligence model, the artificial intelligence model being used for a beam-related function; wherein
the second beam association information is obtained after a second device performs transformation processing on fourth beam association information, the fourth beam association information being beam association information at a receiving end of a first reference signal; and
the third beam association information is obtained after the second device performs transformation processing on fifth beam association information, the fifth beam association information being beam association information at a transmitting end of the first reference signal.

20. Abeam processing apparatus, comprising:
a first transmitting module, configured to transmit first beam association information; wherein the first beam association information comprises second beam association information and/or third beam association information, and the first beam association information is used as input information for an artificial intelligence model, the artificial intelligence model being used for a beam-related function; wherein
the second beam association information is obtained after a second device performs transformation processing on fourth beam association information, the fourth beam association information being beam association information at a receiving end of a first reference signal; and
the third beam association information is obtained after the second device performs transformation processing on fifth beam association information, the fifth beam association information being beam association information at a transmitting end of the first reference signal.

21. A communication device, comprising a processor and a memory, wherein the memory stores a program or an instruction capable of running on the processor, and when the program or instruction is executed by the processor, the beam processing method according to any one of claims 1 to 15 is implemented, or the steps of the beam processing method according to any one of claims 16 to 18 are implemented.

22. A readable storage medium, wherein the readable storage medium stores a program or an instruction, and when the program or instruction is executed by a processor, the beam processing method according to any one of claims 1 to 15 is implemented, or the steps of the beam processing method according to any one of claims 16 to 18 are implemented.
